# EUROPEAN PATENT SPECIFICATION

(11) **EP 2 364 896 B1**
(45) Date of publication and mention of the grant of the patent: **16.05.2012**
(21) Application number: 10002484.3
(22) Date of filing: 10.03.2010
(51) Int. Cl.: B62D 5/04

(54) **Friction force compensation in an electric steering system**
Reibungskraftkompensation in einem elektrischen Lenksystem
Compensation de force de frottement dans un système de direction électrique

(43) Date of publication of application: 14.09.2011
(73) Proprietor: ThyssenKrupp Presta AG, 9492 Eschen (LI)
(72) Inventor: Paholics, Gábor, 07652 Maly Hores (SK); Szepessy, Irme, 1094 Budapest (HU)
(74) Representative: Lenzing Gerber Stute

(56) References cited:
- EP-B1- 1 373 051

## Description

### Background of the invention

The present invention relates to a method for operating an electric power steering apparatus with the features of the preamble of claim 1 and to an electric power steering system with the features of the preamble of claim 8.

Steering systems and especially electric power steering systems in motor vehicles have an internal friction. This internal friction of the system is not constant, but rather varies while the steering system is in use because of temperature changes, load changes and so on. The friction also varies on a long-term time scale due to changes in the bearing surfaces over the service life of the steering system.

Friction forces influence the steering effort of the driver and of the assist motor to turn a wheel of the motor vehicle. Otherwise, friction forces influence reaction forces, which are produced by the contact of the wheel with the road surface, in the steering system. The friction forces can mask the reaction forces, which leads to the problem that the torque sensor of the steering column does not correctly measure the reaction force. As a consequence, the steering system does not correctly apply the steering angle, which is selected by the driver input to the steering wheel. This effect may lead to the problem that the directional stability of the vehicle is not sufficiently maintained or achieved only with an undesirable time delay. This may give disturbances for the driver.

### Description of the related art

The following prior art documents suggest improvements to this problem.

EP1848625B1 proposes that at vehicle speeds exceeding a certain predetermined value, it is checked whether or not the vehicle is driving straight ahead when the driver does not apply any torque to the steering wheel. In this case, a residual torque at the steering wheel is measured which is necessary to compensate for any deviation from the straight-ahead direction. The compensation torque or residual torque is used as a moving average for compensating any pulling of the vehicle to either direction. This technical solution relies on a number of sensor signals, which have to be monitored and processed in a relatively complicated procedure. On the other hand, this system leads to a good compensation of friction forces only around the centre position of this steering system.

DE102006057084A1 proposes to compensate for any deviation from this straight-ahead direction in the centre position of the steering system by integrating the torque which is applied to the steering wheel over a given time period. The value, which is obtained by this procedure, is added to the given torque that is applied by the driver at any moment. As in the system discussed above, this prior art system effectively compensates for friction forces only in the vicinity of the centre position of the steering system.

Essentially the same applies to the steering system that is disclosed in EP1860018A2.

Apart from the general problem of compensating the friction forces in a steering system around the centre position, it is also desirable to measure or estimate friction also for steering angles which differ from the centre position and especially to compensate for such friction forces at off-centre positions. This is especially necessary in steering systems which need to react quickly in all driving situations because superimposed friction forces which are not correctly known, lead to dead times in the steering system and thus to a delayed steering action. The assist mechanism itself is a component of the steering system that adds to the internal friction.

EP 1373051 B1 discloses a power steering concept with column torque control. In this system, an inherent friction compensation functionality is realized, which works best when the reference column torque is independent of the rack load torque. In this system, an observer is used to estimate the load on the rack, and the estimated load is compensated. Friction is a part of the rack load, thus friction is compensated, too.

However, the reference steering column torque usually is not independent of the load and there is a correlation between the load and the reference column torque. This correlation can be simplified as a linear function. The gain between the load and the reference steering column torque defines the percentage of the actual load, which should be felt by the driver. This feeling guarantees that the driver gets a feedback from the forces between the road and the wheels and gets a feeling for the actual driving condition. High gain is equivalent to a low steering assist force.

In straight driving at higher speed high gains are used to improve the road feeling. Now, if a part of the load is internal friction, the driver increasingly feels the friction at high gains, which deteriorates the steering feeling.

It is therefore an object of the present invention to provide a steering apparatus and a method for operation a steering system in which the inner friction of this steering system is dynamically determined and compensated in a large variety of driving conditions.

This object for the friction force compensation is achieved by a method for operating an electric power steering system, wherein the method comprises the following steps:
a) calculate a virtual requested motor torque (30) at least on basis of the steering shaft torque (7),
b) continuously monitor the load (17) of a rack (4), using the signal from at least one sensor by direct or indirect measurement or estimation in a state observer (10),
c) continuously monitor the motor speed (23), using the signal from at least one sensor by direct or indirect measurement or estimation in a state observer,
d) calculate a first compensating value (127) on basis of the time derivative of the rack load (17),
e) combine in a first combination operation the first compensation value (127) with the motor speed (23) to a modified friction force compensation value (227), which is used directly or after a first transformation step as virtual compensation value (427), which is increasing with the decreasing motor speed, and which is used directly or after a second transformation step as a compensation value (29),
f) combine in a second combination operation the compensation value (29) with the virtual requested motor torque (30) to the requested motor torque (12),
g) proceed with step a).

The concept motor speed could mean the angular speed of a rotor of the servo motor. In case of using a linear actuator it could be also the speed of the linear movement of translated actuator part of the servo motor. Motor movement means the rotational movement of rotor or translation movement of the actuator part of servo motor.

A motor speed may be near zero, if the steering angle of road wheels driven by mechanical coupling with motor (rotor or linear actuator) is less than one degree/second. In case of servo motor with a rotor the motor speed may be near zero, if the angular speed of the rotor is less than 5 degree/second.

In general it is obvious that the steering device can operate in two directions, left hand or right hand. All the rules of the invention are applicable in both steering directions. Therefore it was no hint to any positive or negative sign ot any value. If a maximum or minimum value is mentioned, the sign of which is depending of the direction of the steering operation, then that minimum or maximum means the maximum or minimum of the absolute value. As result there never are a negative requested motor torques or a negative compensation values. The sign can sometimes be negative corresponding to the steering direction.

In a preferred embodiment, the method comprises the following steps:
a) transform the motor speed (23) into a adopt motor speed value (123),
b) transform the virtual compensation value (427) and the adopt motor speed value (123) in the second transformation step into the compensation value (29), by selecting the smaller value of both in a selector (26).

In a preferred embodiment, the method comprises the following steps:
a) if the modified friction force compensation value (227) exceeds a threshold maximum compensation value, set the virtual compensation value (427) in the first transformation step as to the threshold maximum compensation value.

In a preferred embodiment, the method comprises the following steps:
a) if the motor speed (23) exceeds a threshold maximum speed value, set the virtual compensation value (427) to zero.

In a preferred embodiment of the method the first combining operation of claim 1 is a subtraction or/and the second combining operation of claim 1 is a simple addition of the input values.

In a preferred embodiment, the method comprises the following steps:
a steering angle of steerable wheels is determined and the compensation value (29) is dependent on the steering angle, such that the compensation value (29) is higher at steering angles close to the centre of the steering system, while the compensation value (29) decreases with increasing steering angles to either side.

In a preferred embodiment, the friction force compensation method is characterized in that the steering angle of the steerable wheels is determined and that it is checked whether or not this angle has been changed under the influence of the requested motor torque (12) which is corrected by the compensation value (29), wherein this change has to be detected within a predefined time frame from the application of the compensation value (29), and that the compensation value (29) for this steering angle or for the whole steering angle range can be adjusted to minimize this change. Between the centre position and the ends of the travel, the friction force compensation can vary from 100% to 0%. It is further preferred that the factor of the compensation in this case is calculated on the basis of the steering angle, and/or the applied steering wheel torque, or the steering angle speed. The factor could also depend on the vehicle speed. As an example it is preferred to compensate the friction force in case of a steering angle of zero (= straight ahead running = angle at the centre of steering system) with a compensation value of more than 90%. In the case that the steering angle is larger than 10% of the maximum steerable steering angle, the friction force is compensated less than 10% in a preferred embodiment.

In a preferred embodiment, the steering angle of the steerable wheels is determined and it is checked whether or not this angle has been changed under the influence of the friction force compensation, wherein this change has to be detected within a predefined time frame from the application of the friction force compensation. If such change is detected, the friction force compensation value for this special steering angle or for the whole steering angle range can be adjusted to minimize this change.

In a preferred embodiment, the method for the friction force compensation is switched off, in event that the said motor speed is zero or near zero.

The object is also achieved by a controller unit for an electric power steering system wherein the unit comprises:
an input for a rack load (17), which is directly or indirectly measured or estimated by a state observer,
a derivation device (21) to calculate a time derivative of said rack load (17),
a first gain (22), which is electrically connected to said derivation device (21) to adopt the derived rack load (117) to a first compensation value (127),
an input for a motor speed (23), directly or indirectly measured or estimated in a state observer,
a combiner (24, 124), preferred in the form of a subtractor, which is electrically connected to said first gain and said input for the motor speed (23), which calculates a friction force compensation value (227) as difference of said compensation value (127) and the motor speed (23),
a second gain (25), which is electrically connected to said combiner (24, 124), preferred to a subtractor, to adopt the friction force compensation value (227) directly or indirectly to a virtual compensation value (427),
a third gain (27), which is electrically connected to said input for the motor speed (23) to adopt the motor speed (23) as a motor speed value (123),
a selector (26), which is electrically connected to said second gain (25) and said third gain (27) to select the maximum of the motor speed value (123) and the virtual compensation value (427) as a compensation value (29).
an adder (28), which is electrically connected to said selector (26) and basic controller device (111), to add the compensation value (29) and the virtual requested motor torque (30) as to a requested motor torque which can be supplied to a further device controlling an electric motor for the electric power steering system.

In a preferred embodiment the controller unit comprises a state observer (10) for estimating a momentary rack load (17) using the signals from at least a torque sensor.

In a preferred embodiment the controller unit comprises a low-pass filter provided between the steering column torque sensor and the control unit, wherein a frequency threshold of the low-pass filter is between and including 1 Hz and 16 Hz.

### Description of the drawings

Preferred embodiments are described in view of the attached drawings, in which
Fig. 1 shows a block diagram of a steering system according to the present invention;
Fig. 2 shows a block diagram of the friction force compensation in the steering system of Fig. 1;
Fig. 3 shows another embodiment of the friction force compensation in the steering system of Fig. 1;
Fig. 4 shows another embodiment of the friction force compensation in the steering system of Fig. 1; and
Fig. 5 shows another embodiment of the friction force compensation in the steering system of Fig. 1.

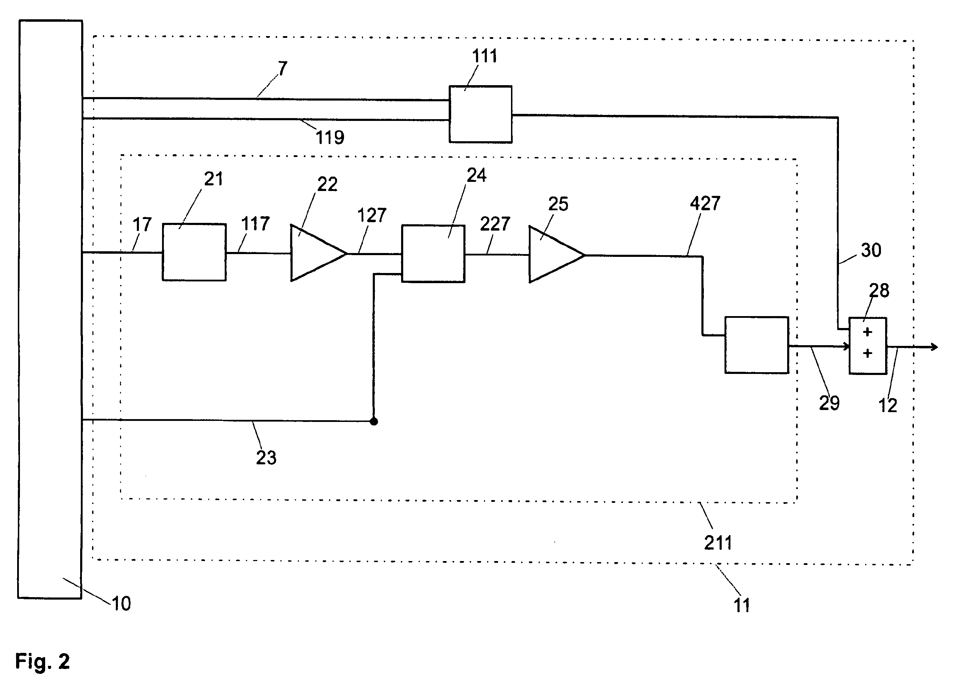

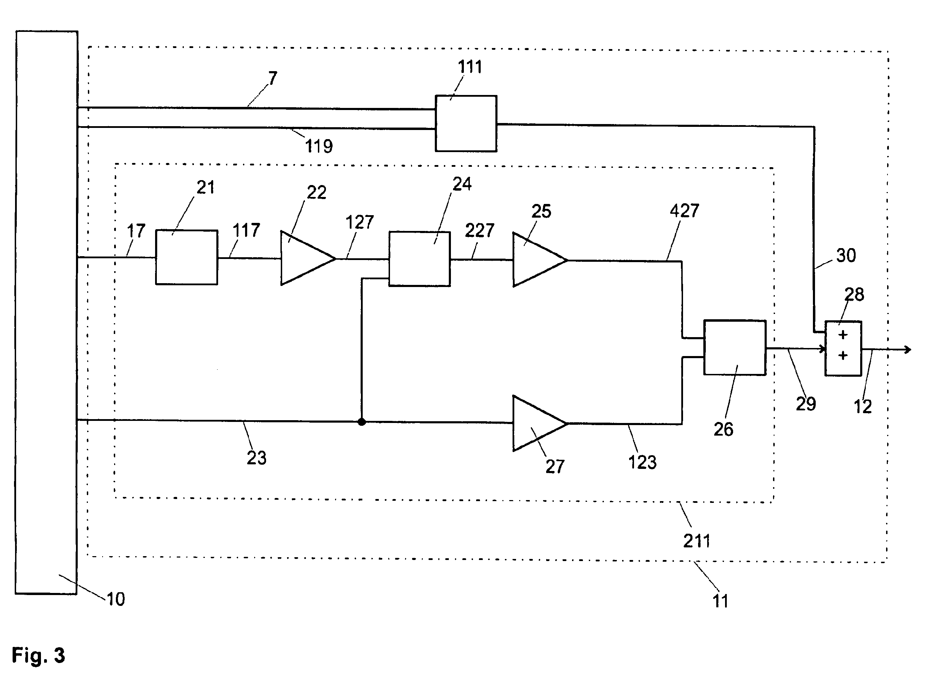

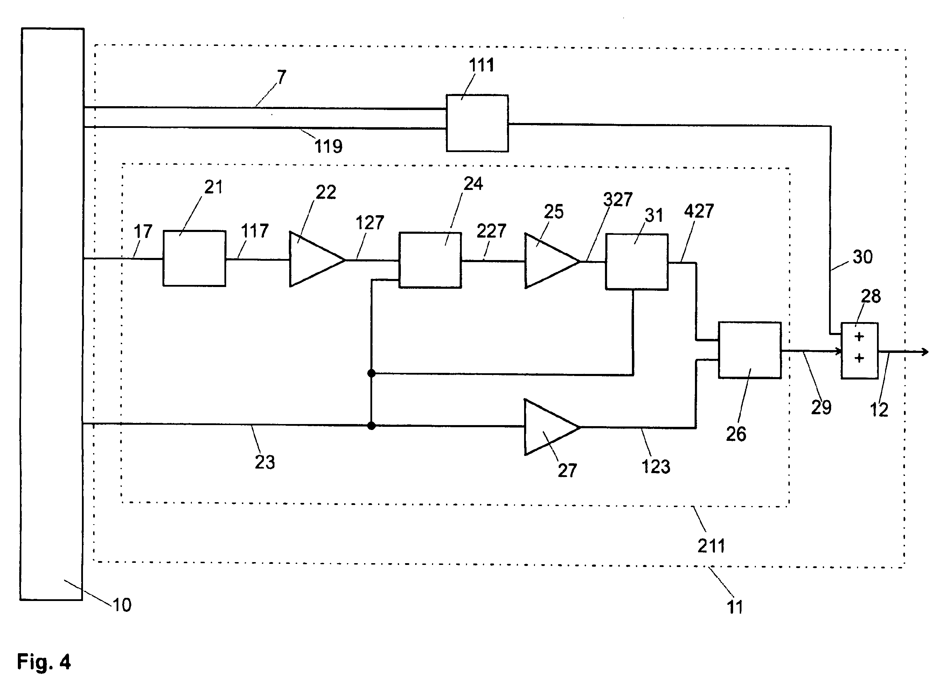

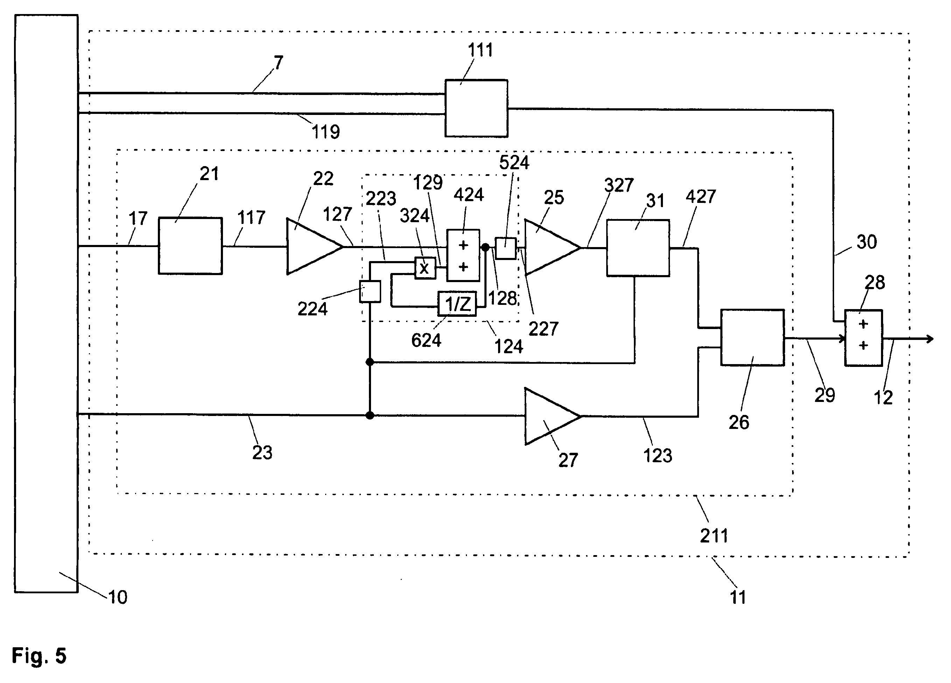

Fig. 2, 3, 4 and 5 are similar. Fig. 4 shows additional components or characteristics of Fig. 3. Fig. 3 shows additional components or characteristics of Fig. 2. Fig. 5 shows a more specific embodiment with different characteristics for the friction force compensation.

### Detailed description of the drawings

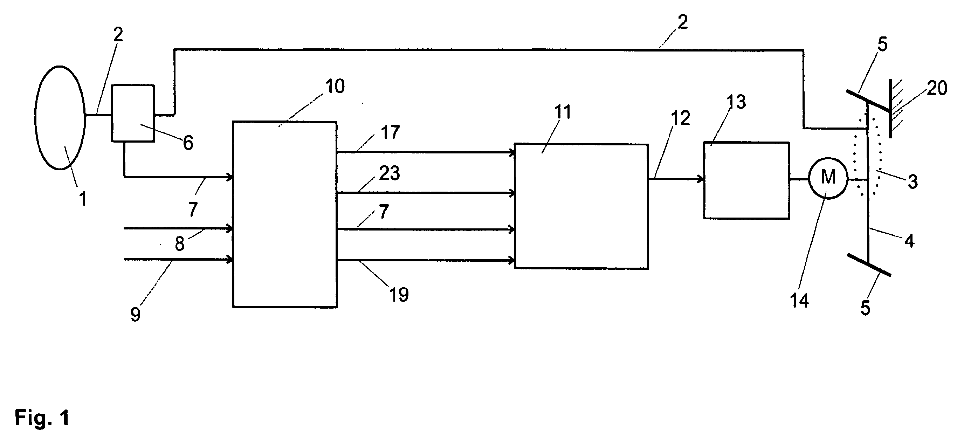

Figure 1 shows a block diagram of an electric power steering system for a road vehicle.

Figure 1 shows, in a schematic representation, an electric power steering system with a hand wheel or steering wheel 1 which is coupled to a steering column 2. The steering column 2 operates a rack and pinion steering gear 3, which comprises a pinion (not shown) engaging a toothed steering rack 4. The steering rack 4 is coupled via tie rods (not shown) to steerable road wheels 5 of a motor vehicle.

A torque sensor 6 is provided on the steering column 2 to produce a torque sensor signal 7 which is essentially dependent on a relative angular position between the steering wheel 1 and the pinion.

A speed sensor signal 8 is provided from a speed sensor of the vehicle, for example by monitoring the rotation or speed of one of the wheels. Additional input signals 9 can be provided, these signals can be one or more of the following: Angular position of the road wheels 5, angular position of the steering wheel 1, outside temperature, temperature of the steering gear 3, lateral g-force, rack load (=linear forces applied to steering rack 4), and pinion load.

A state observer 10 is provided to receive input signals 7, 8 and 9. The state observer provides signals to a controller 11. The controller 11 supplies a requested motor torque 12 to a motor controller 13. The motor controller 13 itself controls a servo motor 14 which, through appropriate gearing, imposes an assist torque to the steering gear 3, thereby assisting the driver effort in operating the steering gear 3 through the steering wheel 1. Such motor controllers 13 are well known in the state of the art and often use a pulse width modulation (PWM) method to control the motor 14.

The signals provided by the state observer 10 to the controller 11 comprise some processed signals and/or vehicle state parameters, which can comprise directly measured values or calculated values that are not directly measured in the steering system, for example the angular speed of the steering wheel 1, linear forces applied to the steering rack 4, external forces to the vehicle wheels 5 which are produced by contact to a road surface 20, and radial forces arising from the engagement of the pinion into the steering rack 4.

The state observer 10 can also pass on unprocessed signals to the controller 11 for example the steering column torque 7, steering gear temperature, vehicle speed and/or the like. In the case in which all necessary values are measured by sensors, it is possible to use the invention without a state observer 10.

Figure 1 shows the example in which the steering column torque 7 and the vehicle speed 8 pass the state observer 10 and are fed to the controller 11 without being processed in the state observer 10. Furthermore the observer supplies state parameters 19 and a rack load value (=RL) 17 to the controller 11. The rack load value 17 can be a measured rack load signal or a calculated rack load as one of the vehicle state parameters. Nevertheless the invention is also applicable when no signals pass the state observer 10 to the controller 11 without being processed.

Figure 2 shows a principle block diagram of the friction force compensation process, which is implemented in the controller 11. The controller device 11 comprises a basic controller device 111 to calculate a virtual requested motor torque 30 on the basis of the steering column torque 7 and other parameters 119, which could include one or more of the state parameters 19 and the vehicle speed 8 and other measured signals. Such calculation procedures are well known in the state of the art, commonly using a requested motor torque which is directly output to a motor controller. The controller device 11 further comprises a rack load compensation controller 211, which uses at least a rack load value 17 and a motor angle speed value 23 to calculate a compensation value 29. The rack load value 17 and/or the motor angle speed value 23 could be a measured signal or a calculated value, calculated by the observer 10. The motor angle speed value 23 is monitoring the angular speed of the rotor of servo motor 14. To determine the compensation value 29 in the compensation controller 211 the rack load value 17 is provided from the state observer 10 and is processed by calculating the time derivative 117 ΔRL = dRL/dt in a derivative device 21. The derivative signal 117 (=ΔRL) is then supplied as input to a motor assist reference first gain 22. The first gain 22 calculates the first compensation value 127. Simultaneously the motor angle speed value 23 is then combined with the first compensation value 127 in combiner 24. The combination in the embodiment of figure 2 is preferably a subtraction and the combiner 24 accordingly preferred to be a subtractor. This leads to a modified friction force compensation value 227, which remains the unchanged first compensation value 127 if the motor speed is zero, and decreases with increasing motor speed.

This procedure takes into account that the friction force that is calculated from derivation device 21 (time derivative of the rack load) is essentially static friction. The result of the two values is passed on to second gain 25. The second gain 25 outputs the virtual compensation value 427. The virtual compensation value 427 is provided as input to a selector 26.

As a feature of the invention it is also possible to compensate the dynamic friction. Dynamic friction is motor speed dependent and is taken into account in the following.

Figure 3 shows that the motor angle speed signal 23 is, simultaneously to being supplied to combiner 24 respective the subtractor, used as input to a third gain 27, which provides a signal representing the speed dependent friction in the servo assist device. This third gain 27 could be also called a viscosity compensation gain. The output of viscosity compensation gain 27, the adopted motor speed value 123 is also supplied to selector 26. The selector 26 processes the signals of the virtual compensation value 427 and the adopt motor speed value 123 from both gains, 25 and 27, and supplies the higher one as compensation value 29 to an adder 28. In the adder the compensation value 29 and the virtual requested motor torque 30 are combined to calculate the requested motor torque 12. This requested motor torque 12 comprises the torque which is needed to support the driver's effort on the steering wheel 1 in order to reduce the steering effort and an additional assist torque which compensates for the internal friction of the steering system as explained above.

Figure 4 shows another embodiment of the invention. In this embodiment a transformation device 31 is added as a difference to the embodiment like Figure 3.

To avoid any over-compensation of frictions, the transformation device 31 calculates the virtual compensation value 427 on the basis of an intermediate virtual compensation value 327, which is calculated by the second gain 25, and the motor angle speed value 23. If the motor angle speed value 23 is less or equal to a threshold value the virtual compensation value 427 is set to the intermediate virtual compensation value 327. If the motor angle speed value 23 exceeds a threshold value and the sign of the angle speed value 23 is equal to the sign of the intermediate virtual compensation value 327, the virtual compensation value 427 is set to the intermediate virtual compensation value 327. Otherwise the virtual compensation value 427 is set to zero.

It is obvious that the transformation device 31 could also implemented to the embodiment of figure 2 without the dynamic friction force compensation.

To achieve a more dynamic and better adopted friction force compensation a special combination method is chosen. The combiner 24 can be replaced by the combiner 124 as shown in figure 5. It is obvious that this replacement could be used in all other shown embodiments. Especially it could be preferred to replace the simple subtraction in the subtractor as special kind of combiner 24 by this special combination method. Other more complex combining methods are possible and applicable. Such methods could be linear, non-linear, fuzzy methods or neuronal network methods - solely or in combination together.

Figure 5 shows another embodiment of the invention including this special combination method. In this embodiment the combiner 24 as shown in figure 3 is replaced by the combiner 124, which consist at least of a derating device 224, a multiplier 324, an internal adder 424, a conditioner 524 and an inverse amplifier 624. The first compensation value 127 is added with a transformed speed value 129. The adder 424 outputs the relative load torque 128. The transformed speed value 129 is calculated on basis of the motor angle speed value 23, which is derated (or throttled) in the derating device 224 and multiplied by the inverse relative load torque 128. The derating device 224 derated the motor angle speed value 23 in relation to different vehicle and steering device parameters. These parameters could be defined as static values at the time of programming the controller, or as dynamic values as result of any state parameter. The derating could be a linear multiplication with a value larger than zero and less than one. Other non-linear operations to operate the derating are also possible.

By the derating and the inverse amplifying feedback a damping of the control output of the combination is realized. This damping could also be a reset of the control output. Nevertheless a high dynamic for low motor angle speed values 23 and low rack load values it is realized. Such more specific combinations need more calculation operations but improve the system dynamics.

To adopt the relative load torque 128 to the realized steering device and control device a conditioning process in the conditioner 524 is applied. In the simplest way a threshold reference value is multiplied with the relative load torque 128 to build up the modified friction force compensation value 227. Such threshold reference value should be determined in test procedures during the application and design process of the steering device. The further progress with this modified friction force compensation value 227 is described in the description of the other embodiments of the invention.

As an example in use, the system works as follows:

A road vehicle, for example a passenger car, is travelling on the road 20. The driver operates the steering wheel 1 through the steering column 2 in order to adjust the steering angle of the steerable wheels 5. The torque sensor 6 registers the torque, which is applied to the steering column 2, either by the driver's direct effort on the steering wheel or by reaction forces of the road surface 20 to the wheels 5. These torque values are supplied from the torque sensor 6 to the state observer 10. Other values which are supplied to the state observer 10 are vehicle speed, steering wheel angle and, if desired, the angle of the wheels, rotational speed of motor 14, rotational position of motor 14, outside temperature, steering gear box temperature and the like.

The state observer 10 uses the sensor signals to calculate the rack load value 17 on the steering rack 4. The state observer also calculates or directly receives the motor angle speed value 23.

Using these signals, the system is able to calculate two friction force contributions to the steering load, namely a friction force which is depending on motor angle speed value 23 and which is derived from the value 23, and a static friction load which is derived from rack load value 17 by calculating the load changes in the derivative device 21 at an operating state in which the motor angle speed is zero or almost zero. In this operational state, it is assumed that steering rack 4 is almost or completely at rest. Any load change in this state is within the frictional force, which keeps the steering rack and other components of the steering system sticking to each other.

In combiner 24, a signal proportional to the speed of motor 14 is combined with the static friction force value. This combination could be a simple subtraction of the speed of motor 14 from the static friction force value, but more complex combining methods are also applicable. This takes into account that static friction is reduced with increasing movement of the components of the steering system.

The friction components are calculated simultaneously and continuously and are fed, through gains 25 and 27, to selector 26, which selects the higher one of both friction values. The selected friction value, the compensation value 29 is output to the adder 28, in which the virtual requested motor torque 30, which is calculated in the basic controller device 111 is converted into a requested motor torque 12. Integrated in the requested motor torque 12 are the compensation or the friction force at any given time and the virtual requested motor torque 30 which is necessary to support the drivers effort on steering wheel 1.

Especially under highway driving conditions in which the vehicle travels in a straight line and servo assist is zero, the friction force compensation value is still supplied to the servo motor 14 which in this embodiment is still active and just supplies the amount of torque which is necessary to compensate friction. The driver's effort in this state of driving is generally not assisted, so that, to the driver, the steering system feels like a direct steering system without servo assistance, but also without friction. The steering wheel, because of the friction force compensation, is light and very direct.

Although the examples used to describe the invention use linear functions (adding, multiplying, subtracting), the invention is also applicable by using more complex functions (exponential, polynomial, quadratic, logarithmic or other). It is also rendered by the invention to use more signals to improve the friction compensation. It could be further useful to introduce temperatures and or vehicle speeds into the compensation controller 211. Further the compensation controller 211 could use a neuronal network or a fuzzy algorithm to combine the values and use experiences to find an improved friction compensation value.

## Claims

1. A method of operating an electric power steering system, wherein the steering system comprises:
• a steering shaft (2), which can be coupled to a steering wheel (1),
• a gear (3) connected to the steering shaft (2) and co-operating with a rack (4) to operate steerable wheels (5) of a vehicle,
• at least one torque sensor (6) for measuring a torque (7) applied to the steering shaft (2),
• and a servo motor (14) supplying steering assist to support a steering effort of a driver, the torque sensor (6) and the servo motor (14) being connected to a control unit (10, 11),
• wherein the control unit (10, 11) calculates a requested motor torque (12) and supplies the requested motor torque (12) as basis of power supply for the servo motor (14),
**characterized in that** the method comprises the following steps:
a) calculating a virtual requested motor torque (30) at least on basis of the steering shaft torque (7),
b) continuously monitoring the load (17) of a rack (4), using the signal from at least one sensor by direct or indirect measurement or estimation in a state observer (10),
c) continuously monitoring the motor speed (23), using the signal from at least one sensor by direct or indirect measurement or estimation in a state observer,
d) calculating a first compensating value (127) on basis of the time derivative of the rack load (17),
e) combining in a first combination operation the first compensation value (127) with the motor speed (23) to a modified friction force compensation value (227), which is used directly or after a first transformation step as virtual compensation value (427), which is increasing with the decreasing motor speed, and which is used directly or after a second transformation step as a compensation value (29),
f) combine in a second combination operation the compensation value (29) with the virtual requested motor torque (30) to the requested motor torque (12),
g) proceed to step a).

2. Method of claim 1 **characterized in that** it comprises the following additional steps:
a) transforming the motor speed (23) into a adopt motor speed value (123),
b) transforming the virtual compensation value (427) and the adopt motor speed value (123) in the second transformation step into the compensation value (29), by selecting the smaller value of both in a selector (26).

3. Method of one or more preceding claims, **characterized in that** it comprises the following additional steps:
a) if the modified friction force compensation value (227) exceeds a threshold maximum compensation value, set the virtual compensation value (427) in the first transformation step to the threshold maximum compensation value.

4. Method of one or more of preceding claims, **characterized in that** it comprises the following additional steps:
a) if the motor speed (23) exceeds a threshold maximum speed value, set the virtual compensation value (427) to zero.

5. Method of one or more of the preceding claims, **characterized in that** the first combining operation of claim 1 is a subtraction or/and the second combining operation of claim 1 is an addition of the input values.

6. Method of one or more of the preceding claims, **characterized in that** a steering angle of steerable wheels is determined and the compensation value (29) is dependent on the steering angle, such that the compensation value (29) is higher at steering angles close to the centre of the steering system, while the compensation value (29) decreases with increasing steering angles to either side.

7. Method of one or more of the preceding claims, **characterized in that** the steering angle of the steerable wheels is determined and that it is checked whether or not this angle has been changed under the influence of the requested motor torque (12) which is corrected by the compensation value (29), wherein this change has to be detected within a predefined time frame from the application of the compensation value (29), and that the compensation value (29) for this steering angle or for the whole steering angle range can be adjusted to minimize this change.

8. A controller unit for an electric power steering system which comprises a basic controller device (111) to calculate a virtual requested motor torque (30) on basis of a steering column torque (7) and other parameters (119), **characterized in that** the unit further comprises:
an input for a rack load (17), which is directly or indirectly measured or estimated by a state observer,
a derivation device (21) to calculate a time derivative of said rack load (17),
a first gain (22), which is electrically connected to said derivation device (21) to adopt the derived rack load (117) to a first compensation value (127),
an input for a motor speed (23), directly or indirectly measured or estimated in a state observer,
a combiner (24, 124), which is electrically connected to said first said gain and said input for the motor speed (23), which calculates a friction force compensation value (227) as difference between of said compensation value (127) and the motor speed (23),
a second gain (25), which is electrically connected to said combiner (24, 124) to adopt the friction force compensation value (227) directly or indirectly to a virtual compensation value (427),
a third gain (27), which is electrically connected to said input for the motor speed (23) to adopt the motor speed (23) as a motor speed value (123),
a selector (26), which is electrically connected to said second gain (25) and said third gain (27) to select the maximum of the motor speed value (123) and the virtual compensation value (427) as a compensation value (29),
an adder (28), which is electrically connected to said selector (26) and basic controller device (111), to add the compensation value (29) and the virtual requested motor torque (30) as a requested motor torque which is supplied to a further device controlling an electric motor of the electric power steering system.

9. The controller unit of claim 8, **characterized in that** the controller unit (10, 11) comprises a state observer (10) for estimating a momentary rack load (17) using the signals from at least one torque sensor.

10. The controller unit of one or more of claim 8 - 9, **characterized in that** a low-pass filter is provided between the steering column torque sensor and the control unit, wherein a frequency threshold of the low-pass filter is between and including 1 Hz and 16 Hz.

## Patentansprüche

1. Verfahren zum Betätigen eines elektrischen Lenksystems, wobei das Lenksystem umfasst:
• eine Lenksäule (2), welche mit einem Lenkrad (1) verbunden werden kann,
• ein Getriebe (3), welches mit der Lenksäule (2) verbunden ist und mit einer Zahnstange (4) zusammenwirkt, um lenkbare Räder (5) eines Fahrzeugs zu betätigen,
• wenigstens einen Drehmomentsensor (6) zum Messen eines Drehmoments (7), welches an die Lenksäule (2) angelegt wird,
• und einen Servomotor (14), welcher Lenkunterstützung liefert, um eine Lenkhandlung eines Fahrers zu unterstützen, wobei der Drehmomentsensor (6) und der Servomotor (14) mit einer Steuereinheit (10, 11) verbunden sind,
• wobei die Steuereinheit (10, 11) ein angefordertes Motordrehmoment (12) berechnet und das angeforderte Motordrehmoment (12) als Grundlage der Stromzufuhr für den Servomotor (14) liefert,
**dadurch gekennzeichnet, dass** das Verfahren die folgenden Schritte umfasst:
a) Berechnen eines virtuell angeforderten Motordrehmoments (30) wenigstens auf Grundlage des Lenksäulendrehmoments (7),
b) ununterbrochenes Überwachen der Last (17) einer Zahnstange (4), wobei das Signal von wenigstens einem Sensor durch direkte oder indirekte Messung oder Abschätzung in einem Zustandsbeobachtungsglied (10) verwendet wird,
c) ununterbrochenes Überwachen der Motordrehzahl (23), wobei das Signal von wenigstens einem Sensor durch direkte oder indirekte Messung oder Abschätzung in einem Zustandsbeobachter verwendet wird,
d) Berechnen eines ersten Kompensationswerts (127) auf der Grundlage der Zeitableitung der Zahnstangenbelastung (17),
e) Verbinden des ersten Kompensationswerts (127) mit der Motordrehzahl (23) zu einem modifizierten Reibungskraftkompensationswert (227) in einer ersten Verbindungsverknüpfung, welcher direkt oder nach einem ersten Umwandlungsschritt als virtueller Kompensationswert (427) verwendet wird, welcher mit der abnehmenden Motordrehzahl ansteigt und welcher direkt oder nach einem zweiten Umwandlungsschritt als ein Kompensationswert (29) verwendet wird,
f) Verbinden des Kompensationswerts (29) in einer zweiten Verbindungsverknüpfung mit dem virtuell angeforderten Motordrehmoment (30) zu einem angeforderten Motordrehmoment (12),
g) Fortschreiten zu Schritt a).

2. Verfahren nach Anspruch 1, **dadurch gekennzeichnet, dass** es die folgenden zusätzlichen Schritte umfasst:
a) Umwandeln der Motordrehzahl (23) in einen Anwendungsmotordrehzahlwert (123),
b) Umwandeln des virtuellen Kompensationswerts (427) und des Anwendungsmotordrehzahlwerts (123) im zweiten Umwandlungsschritt (29) durch Auswählen des kleineren Werts von beiden in einem Auswähler (26).

3. Verfahren nach einem oder mehreren vorangehenden Ansprüchen, **dadurch gekennzeichnet, dass** es die folgenden zusätzlichen Schritte umfasst:
a) wenn der modifizierte Reibungskraftkompensationswert (227) einen maximalen Kompensationsschwellenwert übersteigt, Setzen des virtuellen Kompensationswerts (427) im ersten Umwandlungsschritt auf den maximalen Kompensationsschwellenwert.

4. Verfahren nach einem oder mehreren vorangehenden Ansprüchen, **dadurch gekennzeichnet, dass** es die folgenden zusätzlichen Schritte umfasst:
a) wenn die Motordrehzahl (23) einen maximalen Motordrehzahlschwellenwert übersteigt, Setzen des virtuellen Kompensationswerts (427) auf null.

5. Verfahren nach einem oder mehreren vorangehenden Ansprüchen, **dadurch gekennzeichnet, dass** die erste Verbindungsverknüpfung aus Anspruch 1 eine Subtraktion oder/und Verbindungsverknüpfung aus Anspruch 1 eine Addition der Eingabewerte ist.

6. Verfahren nach einem oder mehreren vorangehenden Ansprüchen, **dadurch gekennzeichnet, dass** ein Lenkwinkel der lenkbaren Räder bestimmt wird und der Kompensationswert (29) abhängig vom Lenkwinkel ist, so dass der Kompensationswert (29) bei Lenkwinkeln nahe zum Zentrum des Lenksystems höher ist, während der Kompensationswert (29) mit zunehmenden Lenkwinkeln auf beiden Seiten abnimmt.

7. Verfahren nach einem oder mehreren vorangehenden Ansprüchen, **dadurch gekennzeichnet, dass** der Lenkwinkel der lenkbaren Räder bestimmt wird und dass geprüft wird, ob sich dieser Winkel unter dem Einfluss des angeforderten Motordrehmoments (12), welches durch den Kompensationswert (29) korrigiert wird, verändert hat oder nicht, wobei diese Veränderung innerhalb eines vordefinierten Zeitrahmens von der Anwendung des Kompensationswertes (29) weg erfasst werden muss, und dass der Kompensationswert (29) für diesen Lenkwinkel oder für den gesamten Lenkwinkelbereich eingestellt werden kann, um diese Veränderung zu minimieren.

8. Steuereinheit für ein elektrisches Lenksystem, welches eine einfache Steuervorrichtung (111) umfasst, um ein virtuell angefordertes Motordrehmoment (30) auf der Grundlage eines Lenksäulendrehmoments (7) und anderer Parameter (119) zu berechnen, **dadurch gekennzeichnet, dass** die Einheit des Weiteren umfasst:
eine Eingabe für eine Zahnstangenbelastung (17), welche direkt oder indirekt durch einen Zustandsbeobachter gemessen oder abgeschätzt wird,
eine Ableitungsvorrichtung (21), um eine Zeitableitung der Zahnstangenbelastung (17) zu berechnen,
ein erstes Verstärkungsglied (22), welches elektrisch mit der Ableitungsvorrichtung (21) verbunden ist, um die abgeleitete Zahnstangenbelastung (117) auf einen ersten Kompensationswert (127) zu übernehmen,
eine Eingabe für die Motordrehzahl (23), welche direkt oder indirekt durch ein Zustandsbeobachtungsglied gemessen oder abgeschätzt wird,
ein Verbindungsglied (24, 124), welches elektrisch mit dem ersten Verstärkungsglied und der Eingabe für die Motordrehzahl (23) verbunden ist, welches einen Reibungskraftkompensationswert (227) als Differenz zwischen dem Kompensationswert (127) und der Motordrehzahl (23) berechnet,
ein zweites Verstärkungsglied (25), welches elektrisch mit dem Verbindungsglied (24, 124) verbunden ist, um den Reibungskraftkompensationswert (227) direkt oder indirekt auf einen virtuellen Kompensationswert (427) zu übernehmen,
ein drittes Verstärkungsglied (27), welches elektrisch mit der Eingabe für die Motordrehzahl (23) verbunden ist, um die Motordrehzahl (23) als einen Motordrehzahlwert (123) zu übernehmen,
ein Auswahlglied (26), welches elektrisch mit dem zweiten Verstärkungsglied (25) und dem dritten Verstärkungsglied (27) verbunden ist, um das Maximum des Motordrehzahlwerts (123) und des virtuellen Kompensationswerts (427) als einen Kompensationswert (29) auszuwählen,
ein Addierglied (28), welches elektrisch mit dem Auswahlglied (26) und der einfachen Steuereinheit (111) verbunden ist, um den Kompensationswert (29) und das virtuelle, angeforderte Motordrehmoment (30) als ein angefordertes Motordrehmoment hinzuzufügen, welches einer weiteren Vorrichtung zugeführt wird, die einen elektrischen Motor des elektrischen Lenksystems steuert.

9. Steuereinheit nach Anspruch 8, **dadurch gekennzeichnet, dass** die Steuereinheit (10, 11) ein Zustandsbeobachtungsglied (10) zum Abschätzen einer momentanen Zahnstangenbelastung (17) unter Verwendung der Signale von wenigstens einem Drehmomentsensor umfasst.

10. Steuereinheit nach einem oder mehreren der Ansprüche 8 - 9, **dadurch gekennzeichnet, dass** ein Tiefbassfilter zwischen dem Lenksäulendrehmomentsensor und der Steuereinheit vorgesehen ist, wobei ein Frequenzschwellenwert des Tiefbassfilters zwischen einschließlich 1 Hz und einschließlich 16 Hz liegt.

## Revendications

1. Procédé de mise en oeuvre d'un système de direction à assistance électrique, selon lequel le système de direction comporte :
un arbre de direction (2), qui peut être relié à un volant de direction (1),
un pignon (3) relié à l'arbre de direction (2) et coopérant avec une crémaillère (4) afin d'actionner des roues directrices (5) d'un véhicule,
au moins un capteur de couple (6) destiné à mesurer un couple (7) appliqué sur l'arbre de direction (2),
et un servomoteur (14) délivrant une assistance de direction afin de supporter un effort de direction d'un conducteur, le capteur de couple (6) et le servomoteur (14) étant reliés à une unité de commande (10, 11),
l'unité de commande (10, 11) calculant un couple de moteur demandé (12) et délivrant le couple de moteur demandé (12) comme base d'alimentation pour le servomoteur (14),
**caractérisé en ce que** le procédé comporte les étapes suivantes :
a) calcul d'un couple de moteur demandé virtuel (30) au moins sur la base du couple d'arbre de direction (7),
b) contrôle continu de la charge (17) d'une crémaillère (4), en utilisant le signal d'au moins un capteur par mesure directe ou indirecte ou estimation dans un observateur d'état (10),
c) contrôle continu de la vitesse de moteur (23), en utilisant le signal d'au moins un capteur par mesure directe ou indirecte ou estimation dans un observateur d'état,
d) calcul d'une première valeur de compensation (127) sur la base de la dérivée par rapport au temps de la charge de crémaillère (17),
e) combinaison dans une première opération de combinaison de la première valeur de compensation (127) avec la vitesse de moteur (23) avec une valeur de compensation de force de frottement modifiée (227), qui est utilisée directement ou après une première étape de transformation comme valeur de compensation virtuelle (427), qui augmente avec la vitesse de moteur qui diminue, et qui est utilisée directement ou après une deuxième étape de transformation comme valeur de compensation (29),
f) combinaison dans une deuxième opération de combinaison de la valeur de compensation (29) avec le couple virtuel de moteur demandé (30) avec le couple de moteur demandé (12),
g) passage à l'étape a).

2. Procédé selon la revendication 1 **caractérisé en ce qu'**il comporte les étapes supplémentaires suivantes :
a) transformation de la vitesse de moteur (23) en une valeur de vitesse de moteur d'adoption (123),
b) transformation de la valeur de compensation virtuelle (427) et de la valeur de vitesse de moteur d'adoption (123) dans la deuxième étape de transformation en valeur de compensation (29), en choisissant la plus petite valeur des deux dans un sélecteur (26).

3. Procédé selon une ou plusieurs des revendications précédentes, **caractérisé en ce qu'**il comporte les étapes supplémentaires suivantes :
a) si la valeur de compensation de force de frottement modifiée (227) dépasse une valeur de compensation maximum de seuil, établir la valeur de compensation virtuelle (427) dans la première étape de transformation à la valeur de compensation maximum de seuil.

4. Procédé selon une ou plusieurs des revendications précédentes, **caractérisé en ce qu'**il comporte les étapes supplémentaires suivantes :
a) si la vitesse de moteur (23) dépasse une valeur de compensation maximum de seuil, établir la valeur de compensation virtuelle (427) à zéro.

5. Procédé selon une ou plusieurs des revendications précédentes, **caractérisé en ce que** la première opération de combinaison selon la revendication 1 est une soustraction ou/et la deuxième opération de combinaison selon la revendication 1 est une addition des valeurs d'entrée.

6. Procédé selon une ou plusieurs des revendications précédentes, **caractérisé en ce qu'**un angle de direction des roues directrices est déterminé et la valeur de compensation (29) dépend de l'angle de direction, de telle sorte que la valeur de compensation (29) est plus grande à des angles de direction proches du centre du système de direction, alors que la valeur de compensation (29) diminue avec l'augmentation des angles de direction vers chaque côté.

7. Procédé selon une ou plusieurs des revendications précédentes, **caractérisé en ce que** l'angle de direction des roues directrices est déterminé et **en ce que** l'on vérifie si cet angle a été changé ou non sous l'influence du couple de moteur demandé (12) qui est corrigé par la valeur de compensation (29), ce changement devant être détecté dans une trame de temps prédéfinie par rapport à l'application de la valeur de compensation (29), et **en ce que** la valeur de compensation (29) pour cet angle de direction ou pour la plage d'angle de direction complète peut être ajustée afin de minimiser ce changement.

8. Unité de commande pour un système de direction à assistance électrique qui comporte un dispositif de commande de base (111) destiné à calculer un couple de moteur demandé virtuel (30) sur la base d'un couple de colonne de direction (7) et d'autres paramètres (119), **caractérisée en ce que** l'unité comporte en outre :
une entrée pour une charge de crémaillère (17), qui est directement ou indirectement mesurée ou estimée par un observateur d'état,
un dispositif de dérivation (21) destiné à calculer une dérivée par rapport au temps de ladite charge de crémaillère (17),
un premier gain (22), qui est électriquement relié audit dispositif de dérivation (21) afin d'adopter la charge de crémaillère dérivée (117) à une première valeur de compensation (127),
une entrée pour une vitesse de moteur (23), mesurée directement ou indirectement ou estimée dans un observateur d'état,
un dispositif de combinaison (24, 124), qui est relié électriquement audit premier gain et à ladite entrée pour la vitesse de moteur (23), qui calcule une valeur de compensation de force de frottement (227) comme différence entre ladite valeur de compensation (127) et la vitesse de moteur (23),
un deuxième gain (25), qui est électriquement relié audit dispositif de combinaison (24, 124) afin d'adopter la valeur de compensation de force de frottement (227) directement ou indirectement à une valeur de compensation virtuelle (427),
un troisième gain (27), qui est électriquement relié à ladite entrée pour la vitesse de moteur (23) afin d'adopter la vitesse de moteur (23) comme valeur de vitesse de moteur (123),
un sélecteur (26), qui est électriquement relié audit deuxième gain (25) et audit troisième gain (27) afin de choisir le maximum de la valeur de vitesse de moteur (123) et de la valeur de compensation virtuelle (427) comme valeur de compensation (29),
un additionneur (28), qui est électriquement relié audit sélecteur (26) et au dispositif de commande de base (111), afin d'additionner la valeur de compensation (29) et le couple de moteur demandé virtuel (30) comme couple de moteur demandé qui est délivré un autre dispositif qui commande un moteur électrique du système de direction à assistance électrique.

9. Unité de commande selon la revendication 8, **caractérisée en ce que** l'unité de commande (10, 11) comporte un observateur d'état (10) destiné à estimer une charge de crémaillère momentanée (17) en utilisant les signaux d'au moins un capteur de couple.

10. Unité de commande selon une ou plusieurs des revendications 8à 9, **caractérisée en ce qu'**un filtre passe-bas est prévu entre le capteur de couple de colonne de direction et l'unité de commande, un seuil de fréquence du filtre passe-bas étant entre et incluant 1 Hz et 16 Hz.
